# EUROPÄISCHE PATENTSCHRIFT

(11) **EP 3 141 176 B1**
(45) Veröffentlichungstag und Bekanntmachung des Hinweises auf die Patenterteilung: **14.03.2018**
(21) Anmeldenummer: 16186727.0
(22) Anmeldetag: 01.09.2016
(51) Int. Cl.: A47L 15/42

(54) **GESCHIRRSPÜLMASCHINE, INSBESONDERE HAUSHALTSGESCHIRRSPÜLMASCHINE**
DISHWASHER, IN PARTICULAR HOUSEHOLD DISHWASHER
LAVE-VAISSELLE, NOTAMMENT LAVE-VAISSELLE MÉNAGER

(30) Priorität: 08.09.2015 DE 102015115036
(43) Veröffentlichungstag der Anmeldung: 15.03.2017
(73) Patentinhaber: Miele & Cie. KG, 33332 Gütersloh (DE)
(72) Erfinder: Bertram, Andre, 33739 Bielefeld (DE); Dahms, Tobias, 30519 Hannover (DE); Sgurski, Eugen, 33649 Bielefeld (DE); Steinmeier, Ralph, 32052 Herford (DE)

(56) Entgegenhaltungen:
- EP-A1- 2 728 052
- WO-A1-2014/198300
- CH-A2- 699 692

## Beschreibung

Die Erfindung betrifft eine Geschirrspülmaschine, insbesondere Haushaltsgeschirrspülmaschine, mit einem einen Spülraum bereitstellenden Spülbehälter, der der Aufnahme von zu reinigendem Spülgut dient, einer innerhalb des Spülbehälters angeordneten Sprüheinrichtung zur Beaufschlagung von zu reinigendem Spülgut mit Spülflotte und mit einer der Umwälzung der Spülflotte dienenden Umwälzpumpe, wobei die Sprüheinrichtung zur Versorgung mit Spülflotte an die Umwälzpumpe strömungstechnisch angeschlossen ist, sowie mit einer Wärmepumpe zur Aufheizung der Spülflotte.

Geschirrspülmaschinen der gattungsgemäßen Art sind aus dem Stand der Technik wohlbekannt. Sie verfügen über einen Spülbehälter, auch Bottich genannt, der einen Spülraum bereitstellt. Dieser ist verwenderseitig über eine Beschickungsöffnung zugänglich, die mittels einer verschwenkbar gelagerten Spülraumtür fluiddicht verschließbar ist. Im bestimmungsgemäßen Verwendungsfall dient der Spülbehälter der Aufnahme von zu reinigendem Spülgut, bei dem es sich beispielsweise um Geschirr, Besteckteile und/oder dergleichen handeln kann.

Zur Beaufschlagung von zu reinigendem Spülgut mit Spülflüssigkeit, der sogenannten Spülflotte, verfügt die Geschirrspülmaschine im Innenraum des Spülbehälters über eine Sprüheinrichtung. Diese Sprüheinrichtung stellt typischerweise verdrehbar gelagerte Sprüharme zur Verfügung, wobei in der Regel zwei oder drei solcher Sprüharme vorgesehen sind. Im bestimmungsgemäßen Verwendungsfall erfolgt eine Beaufschlagung des zu reinigenden Spülguts mit Spülflotte mittels sich drehender Sprüharme.

Die von der Sprüheinrichtung abgegebene Spülflotte sammelt sich in einem Sammeltopf des Spülbehälters an. Dieser ist an eine Umwälzpumpe einerseits und eine Ablaufpumpe andererseits angeschlossen. Zur Beaufschlagung der Sprüheinrichtung mit Spülflotte dient die Umwälzpumpe, die im bestimmungsgemäßen Verwendungsfall die in die Geschirrspülmaschine eingeförderte Spülflüssigkeit umwälzt.

Geschirrspülmaschinen der eingangs genannten Art können bekanntermaßen mit einer Wärmepumpe ausgestattet sein, um den Energieverbrauch insbesondere während einer Heizphase der Spülflotte zu reduzieren, da der Heizvorgang den größten Teil am Energieverbrauch einer Geschirrspülmaschine ausmacht.

Aus der EP 2 682 038 A2 ist eine Geschirrspülmaschine mit einer Luft-Wasser-Wärmepumpe bekannt. Im Betriebsfall entzieht die Wärmepumpe der Umgebungsatmosphäre, das heißt der die Geschirrspülmaschine umgebenden Luft Wärmeenergie, um diese auf die im Inneren der Geschirrspülmaschine umgewälzte Spülflotte zu übertragen. Die Wärmepumpe verfügt zu diesem Zweck über einen Verdampfer, einen Verdichter, einen Verflüssiger und einen diese Komponenten miteinander strömungstechnisch verbindenden Strömungskreislauf. Dabei dient der Verflüssiger als Wärmetauscher.

Im bestimmungsgemäßen Verwendungsfall wird während einer Aufheizphase der Spülflotte über Ventilatoren Raumluft angesaugt und über den Verdampfer der Wärmepumpe geleitet. Dies führt zu einer Abkühlung der zugeführten Raumluft, wobei die der Raumluft entzogene Wärmeenergie auf ein Arbeitsmedium übertragen wird, das infolgedessen im Verdampfer verdampft. Das daraufhin in gasförmiger Form vorliegende Arbeitsmedium wird anschließend in dem Verdichter komprimiert und so auf ein höheres Temperaturniveau gebracht. Schließlich erfolgt eine Einleitung des gasförmigen Arbeitsmediums in den Verflüssiger, wo unter Energiefreigabe eine Verflüssigung des Arbeitsmediums stattfindet. Die dabei freiwerdende Wärmeenergie dient der Spülflottenerwärmung.

Aus dem Stand der Technik ist gleichfalls der Einsatz von Wasser-Wasser-Wärmepumpen bekannt, so zum Beispiel aus der EP 2 206 824 A2 und aus der CH699692A2. Im bestimmungsgemäßen Verwendungsfall wird mit einer solchen Wärmepumpe nicht der Umgebungsatmosphäre, sondern einem Flüssigkeitsreservoir Wärmeenergie entzogen. Die EP 2 206 824 A2 sieht zu diesem Zweck einen geschlossenen Wassertank vor, der den Verdampfer der Wärmepumpe beherbergt. Im Betriebsfall kommt es infolge eines Wärmeenergieentzugs zu einer Abkühlung des vom Tank bevorrateten Wassers. Da der Tank geschlossen ausgebildet ist, kann eine Abkühlung des Wassers bis zur Vereisung vorgenommen werden.

Den vorbekannten Konstruktionen ist gemein, dass die zur Aufheizung der Spülflotte mittels der Wärmepumpe übertragene Wärmeenergie schlussendlich der Umgebungsluft entstammt. Auch bei dem Einsatz einer Wasser-Wasser-Wärmepumpe entstammt die auf die Spülflotte übertragene Wärmeenergie der Umgebungsluft, wenn auch indirekt. Denn ein Aufwärmen, gegebenenfalls sogar Auftauen des im geschlossenen Tank der Wasser-Wasser-Wärmepumpe befindlichen Wassers erfolgt durch Wärmeentzug aus der Umgebungsluft.

Zumindest während der Heizperiode ist der Wärmeentzug aus der Umgebungsluft unerwünscht, da die durch die Wärmepumpe eigentlich erwünschte Energieeinsparung durch das mehr an Energie zur Aufheizung der Umgebungsluft reduziert wird. Bei einem Wasser-Wasser-Wärmetauscher kommt zudem in nachteiliger Weise hinzu, dass ein bestimmungsgemäßer Einsatz der Geschirrspülmaschine unter gleichzeitiger Nutzung der Wärmepumpe energetisch nur dann sinnvoll ist, wenn das im geschlossenen Tank bevorratete Wasser eine gewisse Mindesttemperatur aufweist. Sollte dieses nach einer vorangegangenen Geschirrspülmaschinenbenutzung noch gefroren sein, muss mit einem bestimmungsgemäßen Einsatz der Geschirrspülmaschine bis zum Auftauen des Wassers gewartet werden, was durchaus 24 Stunden in Anspruch nehmen kann.

Ausgehend vom Vorbeschriebenen ist es die **Aufgabe** der Erfindung, eine Geschirrspülmaschine der eingangs genannten Art vorzuschlagen, die einen Wärmepumpenbetrieb ohne nennenswerten Energieentzug aus der Umgebungsluft gestattet.

Zur **Lösung** dieser Aufgabe wird mit der Erfindung eine Geschirrspülmaschine mit den Merkmalen von Anspruch 1 vorgeschlagen.

Die nach der Erfindung vorgesehene Wärmepumpe verfügt über einen Verdampfer, der in einem Frischwassertank angeordnet ist. Im bestimmungsgemäßen Verwendungsfall dient das vom Frischwassertank bevorratete Wasser einem Wärmeübertrag auf die Spülflotte. In Abkehr von einer Luft-Wasser-Wärmepumpe kommt erfindungsgemäß mithin eine Wasser-Wasser-Wärmepumpe zum Einsatz.
Im Unterschied zu vorbekannten Wasser-Wasser-Wärmepumpen sieht die erfindungsgemäße Konstruktion indes keinen geschlossenen Wassertank vor. Es kommt vielmehr ein strömungstechnisch offener Tank zum Einsatz, und zwar ein an den Spülbehälter strömungstechnisch angeschlossener Frischwassertank.

Der offene Frischwassertank hat gegenüber dem aus dem Stand der Technik bekannten geschlossenen Tank spezifische Vorteile.

Es wird eine gegenüber dem geschlossenen System verbesserte Hygiene durch regelmäßigen Wasserwechsel erreicht. Mit Beginn eines bestimmungsgemäßen Spülprogramms rekrutiert sich die Spülflotte zum Teil aus dem im Frischwassertank bevorrateten Frischwasser. Diese weist üblicherweise Raumtemperatur auf und ist damit ca. 5°C bis 10°C wärmer als das einem Kaltwasseranschluss entstammende Wasser. Aus der daraus resultierenden höheren Starttemperatur ergeben sich Zeit- und Energievorteile für das sich anschließende Aufheizen der Spülflotte.

Als Frischwassertank im Sinne der Erfindung wird ein Tank mit einem Aufnahmevolumen verstanden, welcher ausschließlich zur Bevorratung von Frischwasser, und somit insbesondere nicht zur Zwischenspeicherung von bereits verwendeter Spülflotte, dient und dazu eingerichtet ist. Insbesondere ist der Frischwassertank ausgangseitig, insbesondere ausschließlich ausgangsseitig, strömungstechnisch an den Spülbehälter angeschlossen. Eingangsseitig ist er dagegen nicht an den Spülbehälter angeschlossen. Dadurch dass keine Einleitung von Spülflotte aus dem Spülbehälter in den Frischwassertank erfolgt und möglich ist, werden Hygieneprobleme, etwa durch Keimbildung, innerhalb des Frischwassertanks vermieden.

Der nach der erfindungsgemäßen Ausgestaltung vorgesehene offene Frischwassertank ermöglicht es zudem, eine Wärmerückführung aus der am Ende eines Spülschritts noch heißen Spülflotte auf das im Frischwassertank bevorratete Wasser vorzunehmen. Erfindungsgemäß ist zu diesem Zweck vorgesehen, dass innerhalb des Frischwassertanks ein Wärmetauscher angeordnet ist, der an den Spülbehälter strömungstechnisch angeschlossen ist. Durch diesen strömungstechnischen Anschluss kann Spülflotte somit vom Spülbehälter zum Wärmetauscher strömen.

Die mit Beendigung eines Spülschritts unter Umständen noch heiße Spülflotte wird typischerweise durch Abpumpen verworfen. Dank der erfindungsgemäßen Ausgestaltung kann diese nunmehr dazu genutzt werden, um das im Frischwassertank bevorratete Frischwasser aufzuwärmen. Es kann so eine Energierückführung auf das vom Frischwassertank bevorratete Frischwasser mit der Folge stattfinden, dass bei einem anschließenden Aufheizschritt für die Wärmepumpe vorgewärmtes Frischwasser zur Verfügung steht. Die Erwärmung des Frischwassers mittels einer im vorangegangenen Spülschritt erwärmten Spülflotte erbringt im Wesentlichen zwei Vorteile. Zum einen wird ein Wärmeübergang aus der Raumluft auf das im Frischwassertank bevorratete Wasser auf ein Minimum reduziert. Dies deshalb, weil ein Wärmeübertrag aus der Umgebungsluft ob der vorherigen Aufheizung durch die noch warme Spülflotte nicht mehr oder nur noch reduziert stattfindet. Zum anderen wird durch die Wärmerückführung aus der noch warmen Spülflotte sichergestellt, dass auch bei einer sich unter Umständen einstellenden Vereisung des Frischwassertanks eine sofortige Wiedereinsetzbarkeit der Geschirrspülmaschine gewährleistet ist.

Im Ergebnis erbringt die erfindungsgemäße Ausgestaltung folgende Vorteile: Die dem Frischwassertank entnommene Wärmemenge wird aus der nach Abschluss eines Spülschritts verworfenen Spülflotte, das heißt dem Abwasser zugerückgewonnen und nicht dem Aufstellraum, das heißt der Umgebungsluft entzogen. Die Spülmaschine ist nach Abschluss eines Spülprogramms sofort wieder einsatzbereit, auch im Falle einer vorangegangenen Absenkung der Temperatur des im Frischwassertanks bevorrateten Wassers unter 0°C. Die im Abwasser gespeicherte Wärme des letzten Spülgangs kann ebenfalls genutzt werden, was die aus dem Stand der Technik vorbekannten Systeme allesamt nicht gestatten.

Vorzugsweise ist der Wärmetauscher derart an den Spülbehälter strömungstechnisch angeschlossen, dass Spülflotte vom Spülbehälter zum Wärmetauscher und wieder zurück zum Spülbehälter strömen kann. Die Spülflotte kann damit wiederholt in den Wärmetauscher geführt werden. Dies erlaubt es, in kürzerer Zeit eine größere Wärmemenge der Spülflotte zu entziehen und dem Frischwasser zuzuführen. Bevorzugt wird die Spülflotte dabei in einem Kreislauf geführt, in dem die Spülflotte somit vom Spülbehälter zum Wärmetauscher und wieder zurück zum Spülbehälter strömen kann. Der Wärmetauscher, welcher vorzugsweise als Rohrleitung ausgebildet ist, die zumindest abschnittsweise durch den Frischwassertank hindurchgeführt ist , ist somit sowohl eingangsseitig als auch ausgangsseitig an den Spülbehälter strömungstechnisch angeschlossen.

Der Wärmetauscher ist gemäß einem weiteren Merkmal der Erfindung an die Umwälzpumpe angeschlossen. Eine entsprechende Zuleitung zum Wärmetauscher erfolgt über eine Wasserweiche, die in die Umwälzpumpe beispielsweise integriert sein kann. Von Vorteil dieser Ausgestaltung ist, dass es für einen bestimmungsgemäßen Betrieb des Wärmetauschers keiner zusätzlichen Pumpe bedarf, sondern vielmehr auf die von der Geschirrspülmaschine ohnehin bereitgestellte Umwälzpumpe zurückgegriffen werden kann.

Gemäß einer alternativen Ausgestaltung ist vorgesehen, dass der Wärmetauscher an eine separate Pumpe angeschlossen ist. Von Vorteil dieser Ausgestaltung ist, dass ein Betrieb des Wärmetauschers unabhängig vom Betrieb der Umwälzpumpe stattfinden kann, mithin ein Umwälzbetrieb der Umwälzpumpe zur Beschickung der Sprüheinrichtung mit Spülflotte stattfinden und gleichzeitig eine Beschickung des Wärmetauschers mit Spülflotte erfolgen kann.

Gemäß einem weiteren Merkmal der Erfindung ist vorgesehen, dass die Wärmepumpe einen Verflüssiger aufweist, der im Spülbehälter angeordnet ist. Es kann beispielsweise vorgesehen sein, den Verflüssiger im Sammeltopf des Spülbehälters anzuordnen. Von der Umwälzpumpe umgewälzte Spülflotte gelangt so vor einem erneuen Eintritt in die Umwälzpumpe mit dem Verflüssiger in Kontakt, so dass ein Wärmeaustausch zwischen dem vom Verflüssiger geführten Arbeitsmedium und der umgewälzten Spülflotte stattfinden kann.

Gemäß einer alternativen Ausgestaltung kann auch vorgesehen sein, den Verflüssiger der Wärmepumpe in einen von der Umwälzpumpe gespeisten Strömungskreislauf zu integrieren. So kann beispielsweise eine zur Versorgungsleitung der Sprüheinrichtung parallel geschaltete Bypassleitung vorgesehen sein, in die der Verflüssiger integriert ist oder die am Verflüssiger vorbeigeführt wird, so dass ein gewünschter Wärmeübergang vom Arbeitsmedium des Verflüssigers auf die in der Bypassleitung hindurchgeführte Spülflotte stattfinden kann.

Der Frischwassertank ist gemäß einem weiteren Merkmal der Erfindung an eine in den Spülbehälter mündende Überlaufleitung angeschlossen. Eine solche Überlaufleitung ist insbesondere unter dem Gesichtspunkt eines möglichen Zufrierens des Frischwassertanks sinnvoll. Die durch ein solches Einfrieren bedingte Ausdehnung des vom Frischwassertanks bevorratete Wassers kann so ausgeglichen werden.

Mit der Erfindung wird desweiteren vorgeschlagen ein Verfahren zum Betrieb einer Geschirrspülmaschine der vorbeschriebenen Art, welches in vorteilhafter Weise eine Energieeinsparung durch Energierückführung ermöglicht. Ein Spülprogramm weist mehrere Spülabschnitte auf, insbesondere die Spülabschnitte, Reinigen, Zwischenspülen und Klarspülen. Mit Beginn eines ersten Spülabschnitts eines Spülprogramms, insbesondere des Spülabschnitts Reinigen, wird das im Frischwassertank bevorratete Frischwasser in den Spülbehälter entlassen. Diese Frischwasser stammt noch aus einem vorherigen und bereits abgeschlossenen Spülprogramm und weist in vorteilhafter Weise im Unterschied zu Frischwasser, das unmittelbar zuvor dem öffentlichen Frischwassernetz entnommen ist, bereits Raumtemperatur auf. Der entleerte Frischwassertank wird mit Frischwasser aus dem öffentlichen Netz wiederbefüllt. Während des ersten Spülabschnitts erfolgt eine Aufheizung der im Spülbehälter befindlichen Spülflotte. Dies geschieht vollständig oder zumindest teilweise mittels der Wärmepumpe, wobei das im Frischwassertank bevorratete Frischwasser als Wärmequelle für die Wärmepumpe verwendet wird. Infolge der Aufheizung der Spülflotte unter Verwendung der Wärmepumpe kommt es zu einem Abkühlen des im Frischwassertank bevorrateten Frischwassers.

Nach Beendigung des ersten Spülabschnitts ist die im Spülbehälter befindliche Spülflotte noch warm. Um diese Wärmeenergie zu nutzen, wird die noch warme Spülflotte durch Umwälzen wiederholt durch den im Frischwassertank angeordneten Wärmetauscher geführt. Dieses Umwälzen erfolgt über einen Zeitraum von mehreren Minuten. Es kommt so zu einer Energierückführung aus der noch warmen Spülflotte auf das im Frischwassertank bevorratete Frischwasser, was hierdurch aufgewärmt wird. Nach diesem mehrfachen Umwälzen der Spülflotte durch den Wärmetauscherkreislauf wird die Spülflotte vollständig oder zumindest weitgehend aus dem Spülbehälter abgepumpt und über eine Abflussleitung aus der Geschirrspülmaschine geleitet und verworfen.

Mit Beginn eines optionalen weiteren, insbesondere zweiten Spülabschnitts, insbesondere des Spülabschnitts Zwischenspülen, wird in den Spülbehälter zur Auffülllung mit Spülflotte Frischwasser eingeführt und umgewälzt. Das Frischwasser entstammt nicht dem Frischwassertank, sondern der Frischwasserzuführung, an welche die Geschirrspülmaschine angeschlossen ist, beispielsweise das öffentliche Frischwassernetz. Das in der Geschirrspülmaschine vorhandene Spülgut sowie der Spülbehälter der Geschirrspülmaschine sind aufgrund des vorangegangenen ersten Spülabschnitts noch warm. Infolge der Spülflottenumwälzung kommt es deshalb auch zu einem Aufwärmen der Spülflotte. Die Wärmepumpe und/oder eine andere Heizeinrichtung wird in dem zweiten Spülabschnitt dagegen vorzugsweise nicht betrieben. Die insoweit vom durch den ersten Spülabschnitt erwärmten Spülgut und Spülbehälter auf die Spülflotte übertragene Wärmeenergie wird zurückgewonnen und auf das im Frischwassertank bevorratete Frischwasser übertragen, zu welchem Zweck nach Beendigung des zweiten Spülabschnitts wiederum die noch warme Spülflotte wiederholt durch den im Frischwasser angeordneten Wärmetauscher geführt wird. Nach diesem mehrfachen Umwälzen der Spülflotte durch den Wärmetauscherkreislauf wird die Spülflotte vollständig oder zumindest weitgehend aus dem Spülbehälter abgepumpt und über eine Abflussleitung aus der Geschirrspülmaschine geleitet und verworfen.

Mit Beginn eines weiteren, insbesondere dritten Spülabschnitts, insbesondere des Spülabschnitts Klarspülen, wird zunächst zur Auffüllung des Spülbehälters mit Spülflotte Frischwasser in den Spülbehälter eingeführt. Diese wird alsdann umgewälzt und erwärmt, wobei die Erwärmung der Spülflotte unter anderem mittels der Wärmepumpe durchgeführt wird. Dabei wird das im Frischwassertank bevorratete Frischwasser als Wärmequelle für die Wärmepumpe verwendet. Mit Beendigung des dritten Spülabschnitts ist die im Spülbehälter befindliche Spülflotte noch warm, so dass ein Wärmerücktransfer von der Spülflotte auf das im Frischwassertank befindliche Frischwasser stattfinden kann. Verfahrensseitig ist deshalb vorgesehen, dass nach Beendigung des dritten Spülabschnitts die noch warme Spülflotte wiederholt durch den im Frischwassertank angeordneten Wärmetauscher geführt wird. Nach diesem mehrfachen Umwälzen der Spülflotte durch den Wärmetauscherkreislauf wird die Spülflotte aus dem Spülbehälter abgepumpt und über eine Abflussleitung aus der Geschirrspülmaschine geleitet und verworfen.

Durch den, vorzugsweise insgesamt dreifachen Wärmeeintrag aus der Spülflotte in das vom Frischwassertank bevorratete Frischwasser vor dem jeweiligen Abpumpen, wird in den Frischwassertank annähernd die Wärmemenge zurückgegeben, die ihm während der Aufheizphase mittels der Wärmepumpe entnommen wird. Die erfindungsgemäße Verfahrensdurchführung erweist sich damit insgesamt als energieeffizient und infolge der vorbeschriebenen Energierückführung auch als energiesparend. Im Übrigen ergeben sich aufgrund der erfindungsgemäßen Verfahrensdurchführung die schon anhand der erfindungsgemäßen Geschirrspülmaschine vorbeschriebenen Vorteile.

Weitere Merkmale und Vorteile der Erfindung ergeben sich aus der nachfolgenden Beschreibung anhand der Figuren. Dabei zeigen
- Fig. 1: in schematischer Darstellung eine erfindungsgemäße Geschirrspülmaschine gemäß einer ersten Ausführungsform und
- Fig. 2: in schematischer Darstellung eine erfindungsgemäße Geschirrspülmaschine gemäß einer zweiten Ausführungsform.

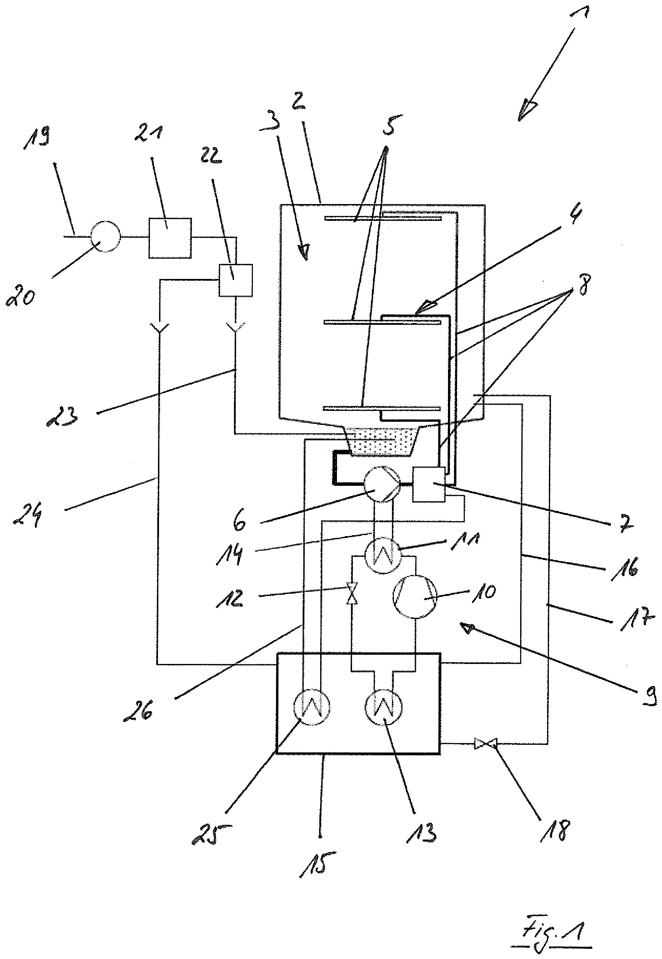

Fig. 1 lässt in schematischer Darstellung eine erfindungsgemäße Geschirrspülmaschine 1 erkennen.

Die Geschirrspülmaschine 1 verfügt über einen Spülbehälter 2. Dieser stellt einen Spülraum 3 bereit, der im bestimmungsgemäßen Verwendungsfall der Aufnahme von zu reinigendem Spülgut dient.

Zur Beschickung von zu reinigendem Spülgut mit Spülflotte dient eine Sprüheinrichtung 4, die innerhalb des Spülbehälters 2 angeordnet ist. Im gezeigten Ausführungsbeispiel verfügt die Sprüheinrichtung 4 über drei Sprüharme 5, die jeweils verdrehbar innerhalb des Spülbehälters 2 angeordnet sind.

Der Spülraum 3 mündet in einen im Detail nicht näher dargestellt Sammeltopf des Spülbehälters 2 ein, an den eine Umwälzpumpe 6 strömungstechnisch angeschlossen ist. Unter strömungstechnischer Zwischenschaltung einer Wasserweiche 7 sind die Sprüharme 5 der Sprüheinrichtung 4 mittels entsprechender Versorgungsleistungen 8 an die Umwälzpumpe 6 angeschlossen, so dass im bestimmungsgemäßen Verwendungsfall eine Beschickung der Sprüharme 5 mit Spülflotte mittels der Umwälzpumpe 6 stattfinden kann.

Die Geschirrspülmaschine 1 verfügt desweiteren über eine Wärmepumpe 9. Diese weist einen Verdichter 10, einen Verflüssiger 11, ein Expansionsorgan 12, einen Verdampfer 13 sowie einen diese Baukomponenten strömungstechnisch miteinander verbindenden Kältemittelkreislauf auf.

Die Geschirrspülmaschine 1 verfügt desweiteren über einen Frischwassertank 15. Dieser ist mittels einer Einlassleitung 17 an den Spülbehälter 2 strömungstechnisch angeschlossen. Ein Öffnen oder Schließen der Einlassleitung 17 erfolgt mittels eines Ventils 18. Desweiteren ist eine Überlaufleitung 16 vorgesehen, die den Frischwassertank 15 strömungstechnisch mit dem Spülbehälter 2 verbindet.

Eingangsseitig ist der Frischwassertank 15 an eine Zuführleitung 19 angeschlossen, die sich ihrerseits beispielsweise aus dem öffentlichen Trinkwassernetz speist.

In die Zuführleitung 19 ist ein Durchflussmesser 20, ein Enthärter 21 sowie ein Umschaltventil 22 integriert. Ausgehend vom Umschaltventil 22 ist die Zuführleitung 19 einerseits mittels einer Spülbehälterleitung 23 an den Spülbehälter 2 und andererseits mittels einer Frischwassertankleitung 24 an den Frischwassertank 15 angeschlossen.

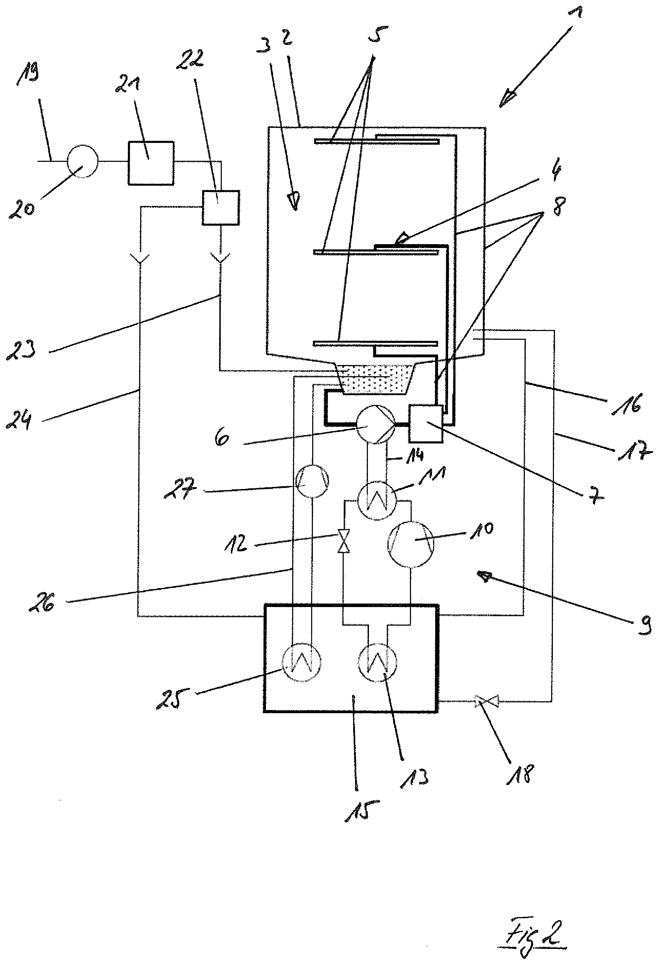

Es ist ferner ein Wärmetaucher 25 vorgesehen, der innerhalb des Frischwassertanks 15 angeordnet ist. Der Wärmetauscher 25 ist gemäß dem gezeigten Ausführungsbeispiel nach Fig. 1 Bestandteil eines an die Umwälzpumpe 6 angeschlossenen Strömungskreislaufes 26. Gemäß einer alternativen Ausgestaltung, die in Fig. 2 gezeigt ist, ist der Wärmetauscher 25 nicht an die Umwälzpumpe 6 angeschlossen, sondern vielmehr an eine unabhängig zur Umwälzpumpe 6 betreibbare Pumpe 27.

Die erfindungsgemäße Geschirrspülmaschine 1 ermöglicht einen Verfahrensablauf wie folgt:
Zu Beginn eines Spülprogramms ist der Frischwassertank 15 mit Frischwasser aus einem vorherigen Programmablauf gefüllt. Dieses vom Frischwassertank 15 bevorratete Frischwasser hat Raumtemperatur. Mit Beginn des Spülprogramms wird dieses Frischwasser dem Spülbehälter 2 zugeführt. Weiteres Frischwasser wird über die Zuführleitung 19 zugeführt, bis im Spülbehälter 2 die für einen bestimmungsgemäßen Programmablauf notwendige Menge an Spülflotte enthalten ist. Nach einer Entleerung des Frischwassertanks 15 in den Spülbehälter 2 erfolgt über die Zuführungsleitung 19 eine Wiederauffüllung des Frischwassertanks 15.

Das im Frischwassertank 15 bevorratete Frischwasser dient als Wärmequelle für ein Aufheizen der im Spülbehälter 2 befindlichen Spülflotte mittels der Wärmepumpe 9. Die zum Aufheizen der gesamten Spülflotte, des Geschirrs und des Spülbehälters 2 benötigte Wärmemenge ist derart groß, dass der vom Frischwasserbehälter 15 bevorratete Tankinhalt zumindest teilweise einfriert.

Nach einem abgeschlossenen Spülschritt muss die nun verschmutzte Spülflotte verworfen werden. Bevor dies geschieht, wird diese über eine vorgebbare Zeitdauer durch den Wärmetauscher 25 gepumpt, sei es mittels der Umwälzpumpe 6 gemäß Ausführungsform nach Fig. 1 oder mittels der Pumpe 27 gemäß der Ausführungsform nach Fig. 2. Im einfachsten Fall kann der Wärmetauscher 25 als Rohr ausgebildet sein, das durch den Frischwassertank 15 hindurchgeführt ist.

Infolge des Hindurchführens der noch warmen Spülflotte durch den Wärmetauscher 25 kommt es zu einer Rückführung von Wärme in das vom Frischwassertank 15 bevorratete Wasser.

Der nächste Spülgang ist typischerweise ein Zwischenspülen. Dabei erfolgt eine Befüllung des Spülbehälters 2 mit Spülflotte aus der Zuführungsleitung 19, da das im Frischwassertank 15 bevorratete Frischwasser noch zu kalt ist.

Obwohl dieser Spülgang unbeheizt ist, erwärmt sich die Spülflotte durch das noch warme Spülgut und den noch warmen Spülbehälter 2. Deshalb wird auch hier wieder vor dem Abpumpen der Zwischenspülflotte die darin gespeicherte Wärme mittels des Wärmetauschers 25 an das im Frischwassertank 15 bevorratete Wasser abgegeben.

Auch beim letzten Spülgang erfolgt der Wassereinlauf direkt aus der Zuführleitung 19 in den Spülbehälter 2. Anschließend erfolgt ein Aufheizen der Spülflotte, und zwar unter erneutem Einsatz der Wärmepumpe 9. Mit Beendigung dieses Spülgangs wird die noch warme Spülflotte erneut dazu genutzt, Wärme in das vom Frischwassertank 15 bevorratete Wasser zurückzuführen.

Durch diesen insgesamt dreifachen Wärmeeintrag aus der Spülflotte in das vom Frischwassertank bevorratete Wasser vor dem jeweiligen Abpumpen, wird in den Frischwassertank 15 annähernd die Wärmemenge zurückgegeben, die ihm während der Aufheizphase mittels der Wärmepumpe 9 entnommen wird.

### Bezugszeichen

- 1: Geschirrspülmaschine
- 2: Spülbehälter
- 3: Spülraum
- 4: Sprüheinrichtung
- 5: Sprüharm
- 6: Umwälzpumpe
- 7: Wasserweiche
- 8: Versorgungsleitung
- 9: Wärmepumpe
- 10: Verdichter
- 11: Verflüssiger
- 12: Expansionsorgan
- 13: Verdampfer
- 14: Strömungskreislauf
- 15: Frischwassertank
- 16: Überlaufleitung
- 17: Einlassleitung
- 18: Ventil
- 19: Zuführleitung
- 20: Durchflussmesser
- 21: Enthärter
- 22: Umschaltventil
- 23: Spülbehälterleitung
- 24: Frischwassertankleitung
- 25: Wärmetauscher
- 26: Strömungskreislauf
- 27: Pumpe

## Patentansprüche

1. Geschirrspülmaschine, insbesondere Haushaltsgeschirrspülmaschine, mit einem einen Spülraum (3) bereitstellenden Spülbehälter (2), der der Aufnahme von zu reinigendem Spülgut dient, einer innerhalb des Spülbehälters (2) angeordneten Sprüheinrichtung (4) zur Beaufschlagung von zu reinigendem Spülgut mit Spülflotte und mit einer der Umwälzung der Spülflotte dienenden Umwälzpumpe (6), wobei die Sprüheinrichtung (4) zur Versorgung mit Spülflotte an die Umwälzpumpe (6) strömungstechnisch angeschlossen ist, sowie mit einer Wärmepumpe (9) zur Aufheizung der Spülflotte,
wobei die Wärmepumpe (9) einen Verdampfer (13) aufweist, der innerhalb eines an den Spülbehälter (2) strömungstechnisch angeschlossenen Frischwassertanks (15) angeordnet ist.
**dadurch gekennzeichnet, dass** innerhalb des Frischwassertanks (15) ein Wärmetauscher (25) angeordnet ist, der an den Spülbehälter (2) strömungstechnisch angeschlossen ist.

2. Geschirrspülmaschine nach Anspruch 1, **dadurch gekennzeichnet, dass** der Wärmetauscher (25) an die Umwälzpumpe (6) angeschlossen ist.

3. Geschirrspülmaschine nach Anspruch 1, **dadurch gekennzeichnet, dass** der Wärmetauscher (25) an eine unabhängig zur Umwälzpumpe (6) betreibbare Pumpe (27) angeschlossen ist.

4. Geschirrspülmaschine nach einem der vorhergehenden Ansprüche, **dadurch gekennzeichnet, dass** die Wärmepumpe (9) einen Verflüssiger (11) aufweist, der im Spülbehälter (2) angeordnet ist.

5. Geschirrspülmaschine nach einem der vorhergehenden Ansprüche 1 bis 3, **dadurch gekennzeichnet, dass** die Wärmepumpe (9) einen Verflüssiger (11) aufweist, der in einen von der Umwälzpumpe (6) gespeisten Strömungskreislauf (14) integriert ist.

6. Geschirrspülmaschine nach einem der vorhergehenden Ansprüche, **dadurch gekennzeichnet, dass** der Frischwassertank (15) an eine in den Spülbehälter (2) mündende Überlaufleitung (16) angeschlossen ist.

7. Verfahren zum Betrieb einer Geschirrspülmaschine (1) nach einem der vorhergehenden Ansprüche, bei dem mit Beginn eines ersten Spülabschnitts im Frischwassertank (15) bevorratetes Frischwasser in den Spülbehälter (2) entlassen und der Frischwassertank (15) mit Frischwasser wiederbefüllt wird, bei dem die im Spülbehälter (2) befindliche Spülflotte mittels der Wärmepumpe (9) aufgeheizt wird, wobei das im Frischwassertank (15) bevorratete Frischwasser als Wärmequelle für die Wärmepumpe (9) verwendet wird und bei dem nach Beendigung des ersten Spülabschnitts die noch warme Spülflotte wiederholt durch den im Frischwassertank (15) angeordneten Wärmetauscher (25) geführt wird.

8. Verfahren nach Anspruch 7, bei dem mit Beginn eines zweiten Spülabschnitts zur Auffüllung des Spülbehälters (2) mit Spülflotte Frischwasser in den Spülbehälter (2) eingeführt und anschließend umgewälzt wird und bei dem nach Beendigung des zweiten Spülabschnitts die noch warme Spülflotte wiederholt durch den im Frischwassertank (15) angeordneten Wärmetauscher (25) geführt wird.

9. Verfahren nach Anspruch 7 oder 8, bei dem mit Beginn eines dritten Spülabschnitts zur Auffüllung des Spülbehälters (2) mit Spülflotte Frischwasser in den Spülbehälter (2) eingeleitet und anschließend umgewälzt wird, bei dem die im Spülbehälter (2) befindliche Spülflotte mittels der Wärmepumpe (9) aufgeheizt wird, wobei das im Frischwassertank (15) bevorratete Frischwasser als Wärmequelle für die Wärmepumpe (9) verwendet wird und bei dem nach Beendigung des dritten Spülabschnitts die noch warme Spülflotte wiederholt durch den im Frischwassertank (15) angeordneten Wärmetauscher (25) geführt wird.

## Claims

1. Dishwasher, in particular a household dishwasher, comprising a washing container (2) that provides a washing chamber (3) and is used for receiving washware to be cleaned, a spray device (4) arranged inside the washing container (2) for applying washing solution to the washware to be cleaned, and comprising a circulation pump (6) which is used for circulating the washing solution, the spray device (4) being fluidically connected to the circulation pump (6) in order to supply the washing solution, and comprising a heat pump (9) for heating the washing solution,
the heat pump (9) having an evaporator (13), which is arranged inside a fresh water tank (15) that is fluidically connected to the washing container (2),
**characterised in that** a heat exchanger (25) is arranged inside the fresh water tank (15) and is fluidically connected to the washing container (2).

2. Dishwasher according to claim 1, **characterised in that** the heat exchanger (25) is connected to the circulation pump (6).

3. Dishwasher according to claim 1, **characterised in that** the heat exchanger (25) is connected to a pump (27) that is operable independently of the circulation pump (6).

4. Dishwasher according to any of the preceding claims, **characterised in that** the heat pump (9) has a condenser (11) that is arranged in the washing container (2).

5. Dishwasher according to any of the preceding claims 1 to 3, **characterised in that** the heat pump (9) has a condenser (11) that is integrated in a flow circuit (14) that is powered by the circulation pump (6).

6. Dishwasher according to any of the preceding claims, **characterised in that** the fresh water tank (15) is connected to an overflow pipe (16) that leads into the washing container (2).

7. Method for operating a dishwasher (1) according to any of the preceding claims, in which, at the beginning of a first washing stage, fresh water stored in the fresh water tank (15) is released into the washing container (2) and the fresh water tank (15) is refilled with fresh water, in which the washing solution located in the washing container (2) is heated by means of the heat pump (9), wherein the fresh water stored in the fresh water tank (15) is used as a heat source for the heat pump (9), and in which, after the first washing stage has ended, the still-warm washing solution is repeatedly guided through the heat exchanger (25) arranged in the fresh water tank (15).

8. Method according to claim 7, in which, at the beginning of a second washing stage, fresh water is fed into the washing container (2) and subsequently circulated in order to fill up the washing container (2) with washing solution, and in which, after the second washing stage has ended, the still-warm washing solution is repeatedly guided through the heat exchanger (25) arranged in the fresh water tank (15).

9. Method according to either claim 7 or claim 8, in which, at the beginning of a third washing, stage fresh water is introduced into the washing container (2) and subsequently circulated in order to fill up the washing container (2) with washing solution, in which the washing solution located in the washing container (2) is heated by means of the heat pump (9), wherein the fresh water stored in the fresh water tank (15) is used as a heat source for the heat pump (9), and in which, after the third washing stage has ended, the still-warm washing solution is repeatedly guided through the heat exchanger (25) arranged in the fresh water tank (15).

## Revendications

1. Lave-vaisselle, en particulier lave-vaisselle domestique, avec une cuve de lavage (2) qui fournit un espace de lavage (3) et qui sert à la réception d'objets à nettoyer, avec un dispositif d'aspersion (4) qui est disposé à l'intérieur de la cuve de lavage (2) et qui sert à exposer des objets à nettoyer à un bain de lavage, et avec une pompe de circulation (6) servant à faire circuler le bain de lavage, dans lequel le dispositif d'aspersion (4) est raccordé fluidiquement à la pompe de circulation (6) pour l'alimentation en bain de lavage, ainsi qu'avec une pompe à chaleur (9) destinée à chauffer le bain de lavage,
dans lequel la pompe à chaleur (9) présente un évaporateur (13) qui est disposé à l'intérieur d'un réservoir d'eau fraîche (15) raccordé fluidiquement à la cuve de lavage (2),
**caractérisé en ce que**, à l'intérieur du réservoir d'eau fraîche (15), il est disposé un échangeur de chaleur (25) qui est raccordé fluidiquement à la cuve de lavage (2).

2. Lave-vaisselle selon la revendication 1, **caractérisé en ce que** l'échangeur de chaleur (25) est raccordé à la pompe de circulation (6).

3. Lave-vaisselle selon la revendication 1, **caractérisé en ce que** l'échangeur de chaleur (25) est raccordé à une pompe (27) pouvant fonctionner indépendamment de la pompe de circulation (6).

4. Lave-vaisselle selon l'une des revendications précédentes, **caractérisé en ce que** la pompe à chaleur (9) présente un condenseur (11) qui est disposé dans la cuve de lavage (2).

5. Lave-vaisselle selon l'une des revendications précédentes 1 à 3, **caractérisé en ce que** la pompe à chaleur (9) présente un condenseur (11) qui est intégré dans une circuit d'écoulement (14) alimenté par la pompe de circulation (6).

6. Lave-vaisselle selon l'une des revendications précédentes, **caractérisé en ce que** le réservoir d'eau fraîche (15) est raccordé à une conduite de trop-plein (16) débouchant dans la cuve de lavage (2).

7. Procédé de fonctionnement d'un lave-vaisselle (1) selon l'une des revendications précédentes, dans lequel, au début d'une première séquence de lavage, de l'eau fraîche stockée dans le réservoir d'eau fraîche (15) est évacuée dans la cuve de lavage (2), et le réservoir d'eau fraîche (15) est rempli de nouveau avec de l'eau fraîche, dans lequel le bain de lavage situé dans la cuve de lavage (2) est chauffé au moyen de la pompe à chaleur (9), dans lequel l'eau fraîche stockée dans le réservoir d'eau fraîche (15) est utilisée comme source de chaleur pour la pompe à chaleur (9), et dans lequel, une fois terminée la première séquence de lavage, le bain de lavage encore chaud est guidé de façon répétée à travers l'échangeur de chaleur (25) disposé dans le réservoir d'eau fraîche (15).

8. Procédé selon la revendication 7, dans lequel, au début d'une deuxième séquence de lavage, pour le remplissage de la cuve de lavage (2) avec le bain de lavage, de l'eau fraîche est introduite dans la cuve de lavage (2) et puis est mise en circulation, et dans lequel, une fois terminée la deuxième séquence de lavage, le bain de lavage encore chaud est guidé de façon répétée à travers l'échangeur de chaleur (25) disposé dans le réservoir d'eau fraîche (15).

9. Procédé selon la revendication 7 ou 8, dans lequel, au début d'une troisième séquence de lavage, pour le remplissage de la cuve de lavage (2) avec le bain de lavage, de l'eau fraîche est introduite dans la cuve de lavage (2) et puis est mise en circulation, dans lequel le bain de lavage situé dans la cuve de lavage (2) est chauffé au moyen de la pompe à chaleur (9), dans lequel l'eau fraîche stockée dans le réservoir d'eau fraîche (15) est utilisée comme source de chaleur pour la pompe à chaleur (9), et dans lequel, une fois terminée la troisième séquence de lavage, le bain de lavage encore chaud est guidé de façon répétée à travers l'échangeur de chaleur (25) disposé dans le réservoir d'eau fraîche (15).
